# EUROPEAN PATENT APPLICATION

(11) **EP 4 769 713 A1**
(43) Date of publication of application: **01.07.2026**
(21) Application number: 24894602.2
(22) Date of filing: 20.11.2024
(51) Int. Cl.: H01M 50/24, H01M 10/04, H01M 10/658, H01M 50/342, H01M 50/224, H01M 50/502, H01M 50/178

(54) **BATTERY MODULE AND BATTERY PACK COMPRISING SAME**

(30) Priority: 21.11.2023 KR 20230162806
(71) Applicant: LG ENERGY SOLUTION, LTD., Seoul 07335 (KR)
(72) Inventor: UHM, Jae Yong, Daejeon 34122 (KR)
(74) Representative: Plasseraud IP
(86) International application number: PCT/KR2024/018383
(87) International publication number: WO 2025/110710

(57) **Abstract**

A battery module according to the present disclosure includes a secondary battery including an electrode lead, a module case configured to accommodate the secondary battery, the module case including a mesh portion having a mesh shape, and a refractory paint layer applied to the mesh portion, wherein the refractory paint layer foams by heat of a predetermined temperature or more.

## Description

### TECHNICAL FIELD

### [CROSS-REFERENCE TO RELATED APPLICATION]

The present application claims priority to Korean Patent Application No. 10-2023-0162806 filed on November 21, 2023 in the Republic of Korea, the disclosure of which is incorporated herein by reference.

### [TECHNICAL FIELD]

The present disclosure relates to a battery module and a battery pack including the same. More particularly, the present disclosure relates to a battery module for preventing flame propagation in the event of flames in a secondary battery, and a battery pack including the same.

### BACKGROUND ART

With the technology development and growing demand for electric vehicles and mobile devices, the demand for secondary batteries as an energy source is increasing. As opposed to primary batteries that can only be used once, secondary batteries may be reused through charging. A secondary battery includes a positive electrode and a negative electrode. When oxidation of a metal occurs at the positive electrode, electricity is produced by movement of electrons released from the metal. The oxidized metal at the positive electrode moves to the negative electrode through an electrolyte and reduction occurs at the negative electrode.

To manufacture the secondary battery, first, an electrode active material slurry is applied to a positive current collector and a negative current collector to manufacture the positive electrode and the negative electrode, and the positive electrode and the negative electrode are stacked on two sides of a separator to form an electrode assembly. The electrode assembly is housed in a battery case, and the electrolyte is injected, followed by sealing.

A plurality of secondary batteries may form a battery module. The battery module may be connected to a battery management system (BMS) that manages the voltage of the plurality of secondary batteries at once, and the battery management system may manage the plurality of secondary batteries to keep the voltage of each secondary battery constant.

A plurality of battery modules may form a battery pack. The battery pack may include a cooling device to manage the heat generation of each of the plurality of battery modules in order to operate the plurality of battery modules at the normal operating range of temperatures. The battery pack may be mounted on a device requiring electricity, such as a vehicle, to supply electricity to the device requiring electricity.

However, the secondary battery may experience thermal runaway due to side reaction, and in the event of thermal runaway in the secondary battery, flames may occur in the secondary battery. When flames occur in the secondary battery, the flames may spread to the adjacent secondary battery. In this instance, in the event of flame propagation across a certain battery module, when the flames spread to the adjacent battery module, the flames may spread to the entire battery pack. In the event of flame propagation across the entire battery pack, a replacement problem of the secondary battery arises, but when a user is in the device that operates using the secondary battery, it may also cause a problem that may threaten the life of the user.

### SUMMARY

### TECHNICAL PROBLEM

The present disclosure is designed to solve the above-described problems, and therefore the present disclosure is directed to preventing flame propagation from a battery module including a secondary battery in which flames occurred to an adjacent battery module in the event of the flames in the corresponding secondary battery.

The technical problems to be solved by the present disclosure are not limited to the aforementioned technical problems, and these and other technical problems will be clearly understood by persons having ordinary skill in the technical field pertaining to the present disclosure from the following description.

### TECHNICAL SOLUTION

A battery module according to an embodiment of the present disclosure includes a secondary battery including an electrode lead, a module case configured to accommodate the secondary battery, the module case including a mesh portion having a mesh shape, and a refractory paint layer applied to the mesh portion, wherein the refractory paint layer foams by heat of a predetermined temperature or more.

The mesh portion may have a plurality of mesh holes arranged at a predetermined interval.

The module case may include an end plate facing the electrode lead, the end plate may include a first mesh portion facing the electrode lead, the refractory paint layer applied to the first mesh portion may be defined as a first refractory paint layer, and the first refractory paint layer may be applied to a surface of the first mesh portion facing the electrode lead.

The first refractory paint layer may pass through a plurality of mesh holes formed in the first mesh portion.

The first refractory paint layer may be applied to a surface of the first mesh portion facing away from the electrode lead.

The plurality of mesh holes may have a groove shape.

The module case may include a module case body including a lower surface and sides to form a battery accommodation space for accommodating the secondary battery, the module case body may include a second mesh portion facing the secondary battery, the refractory paint layer applied to the second mesh portion may be defined as a second refractory paint layer, and the second refractory paint layer may be applied to a surface of the second mesh portion facing the secondary battery.

The second refractory paint layer may pass through a plurality of mesh holes formed in the second mesh portion.

The second refractory paint layer may be applied to a surface of the second mesh portion facing away from the secondary battery.

The second mesh portion may be present on the side of the module case body.

The battery module may further include an insulation sheet located between the secondary battery and the lower surface of the module case body.

The battery module may further include a module cover configured to cover the battery accommodation space, the module cover having a vent hole.

The refractory paint layer may not be applied to the module cover.

The refractory paint layer may be applied to the module case by injection molding.

The module case may include a metal material.

A battery module according to an embodiment of the present disclosure includes a secondary battery including an electrode lead, a module case configured to accommodate the secondary battery, a bus bar electrically connected to the electrode lead, a busbar frame configured to mount the busbar, wherein the busbar frame is accommodated in the module case, the busbar frame including a mesh portion having a mesh shape, and a refractory paint layer applied to the mesh portion, wherein the refractory paint layer foams by heat of a predetermined temperature or more.

The mesh portion may have a plurality of mesh holes arranged at a predetermined interval.

The module case may include another mesh portion of a mesh shape.

The busbar frame may include a polymer material.

A battery pack according to an embodiment of the present disclosure includes a battery module, and a pack case configured to accommodate the battery module, wherein the battery module includes a secondary battery including an electrode lead, a module case configured to accommodate the secondary battery, the module case including an end plate facing the electrode lead, and a refractory paint layer applied to an inner side of the module case, the refractory paint layer including a first refractory paint layer applied to the end plate, and wherein the end plate includes a mesh portion having a mesh shape to which the first refractory paint layer is applied.

### ADVANTAGEOUS EFFECTS

The battery module according to the present disclosure includes the module case including the mesh portion having the mesh shape and the refractory paint layer applied to the mesh portion, wherein the refractory paint layer foams by heat of the predetermined temperature or more, thereby preventing flame propagation from the battery module including the secondary battery in which flames occurred to the adjacent battery module in the event of the flames in the corresponding secondary battery.

Alternatively, the battery module according to the present disclosure includes the busbar frame including the mesh portion having the mesh shape, and the refractory paint layer applied to the mesh portion, wherein the refractory paint layer foams by heat of the predetermined temperature or more, thereby preventing flame propagation from the battery module including the secondary battery in which flames occurred to the adjacent battery module in the event of the flames in the corresponding secondary battery.

The effects that may be obtained from the present disclosure are not limited to the aforementioned effects, and these and other effects will be clearly understood by persons having ordinary skill in the technical field pertaining to the present disclosure from the following description.

### BRIEF DESCRIPTION OF THE DRAWINGS

FIG. 1 is a perspective view of a battery module according to a first embodiment of the present disclosure.
FIG. 2 is an exploded view of the battery module shown in FIG. 1.
FIG. 3 is an assembly diagram of a secondary battery shown in FIG. 2.
FIG. 4 is a rear perspective view showing an end plate of the battery module shown in FIG. 2 and its neighborhood.
FIG. 5 is a front perspective view of the end plate shown in FIG. 4.
FIG. 6 is an enlarged perspective view of section VI of the end plate shown in FIG. 5.
FIG. 7 is a cross-sectional view of the battery module shown in FIG. 1, taken along the line VII-VII'.
FIG. 8 is an enlarged cross-sectional view of section VIII of the battery module shown in FIG. 7.
FIG. 9 is a perspective view showing a module case body shown in FIG. 2.
FIG. 10 is a cross-sectional view of the battery module shown in FIG. 1, taken along the line X-X'.
FIG. 11 is a conceptual diagram showing side reaction occurred in a secondary battery of the battery module shown in FIG. 7.
FIG. 12 is a conceptual diagram showing that a refractory paint layer foams in the event of flame propagation from the secondary battery shown in FIG. 11.
FIG. 13 is a conceptual diagram showing that the end plate shown in FIG. 5 is accommodated in an injection molding device.
FIG. 14 is a conceptual diagram showing an injection molded product combined with the end plate shown in FIG. 13.
FIG. 15 is a conceptual diagram showing that the end plate shown in FIG. 14 is separated from the injection molding device.
FIG. 16 is an exploded view showing a battery pack including the battery module shown in FIG. 1.
FIG. 17 is an enlarged view of a mesh portion according to a second embodiment of the present disclosure.
FIG. 18 is an enlarged view of a mesh portion according to a third embodiment of the present disclosure.
FIG. 19 is a cross-sectional view of a mesh portion according to a fourth embodiment of the present disclosure.
FIG. 20 is a cross-sectional view of a mesh portion and its neighborhood according to a fifth embodiment of the present disclosure.
FIG. 21 is a cross-sectional view of a battery module according to a sixth embodiment of the present disclosure.
FIG. 22 is a rear perspective view of a busbar frame according to a seventh embodiment of the present disclosure.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, and rather, should be interpreted based on the meanings and concepts corresponding to the technical aspect of the present disclosure on the basis of the principle that the inventor is allowed to define the terms appropriately for the best explanation.

It should be understood that various embodiments of the present disclosure and the terms used herein are not intended to limit the technical features of the present disclosure to particular embodiments, and include a variety of changes, equivalents or substitutes of the corresponding embodiments.

In relation to the description of the drawings, for the similar or related elements, the similar reference numerals may be used.

The singular form of a noun corresponding to an item may include one or more items unless otherwise indicated by the context.

Each of phrases such as "A or B", "at least one of A and B", "at least one of A or B", "A, B or C", "at least one of A, B and C" and "at least one of A, B or C" as used herein may include any one of the items listed together with the corresponding phrase or all possible combinations of them.

The term "and/or" includes a combination of a plurality of related stated elements or any of the plurality of related stated elements.

The terms such as "first", "second" and so on may be simply used to distinguish the corresponding element from the corresponding other embodiment, and are not intended to limit the corresponding elements in another aspect (for example, importance or order).

When a certain (for example, first) element is referred to as being "coupled" or "connected" to another (for example, second) element with or without the term "functionally" or "through communication", the element may be connected to the other element directly (for example, wiredly), wirelessly or through a third element.

The term "comprise", "include" or "have" indicates the presence of the stated features, figures, steps, operations, elements, components or a combination of them, and does not preclude the presence or addition of one or more other features, figures, steps, operations, elements, components or a combination of them.

When an element is referred to as "being connected to", "being coupled to", "being supported by" or "contacting" another element, this includes not only direct connection, coupling, support or contact of the elements but also indirect connection, coupling, support or contact through a third element.

When an element is referred to as being located "on" another element, the element can contact the other element and intervening elements may be present.

Meanwhile, the terms "up-down direction", "lower", and "front-rear direction" as used herein are defined on the basis of the drawings, and the shape and location of each element is not limited by these terms.

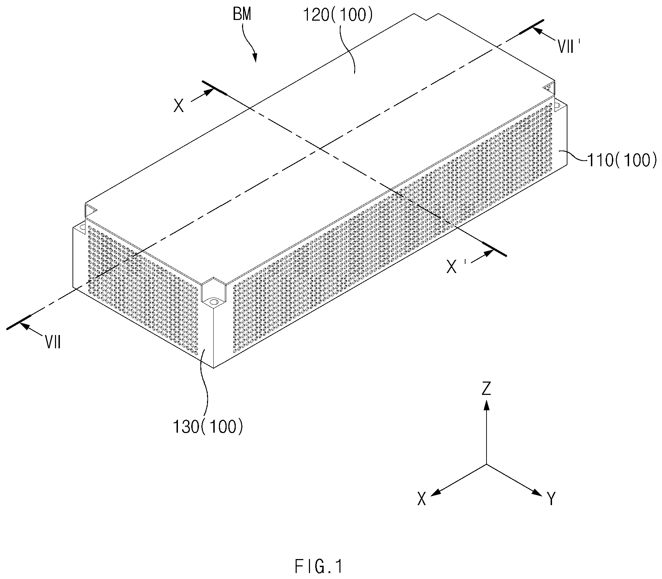

Specifically, as shown in FIG. 1, a direction in which an end plate 130 faces is defined as a front-rear direction, and on the basis of the definition, an up-down direction and a left-right direction may be defined.

Hereinafter, the embodiments according to the present disclosure will be described in detail with reference to the accompanying drawings.

### First embodiment 1

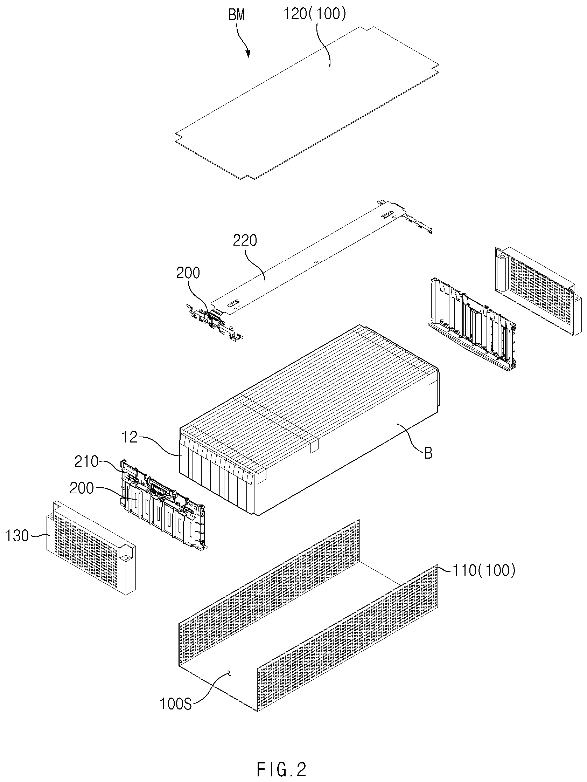

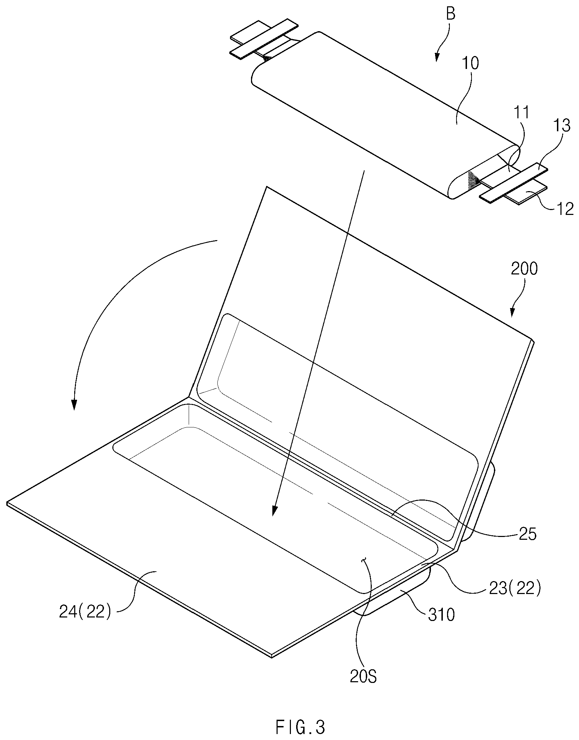

FIG. 1 is a perspective view of a battery module BM according to the first embodiment of the present disclosure. FIG. 2 is an exploded view of the battery module BM shown in FIG. 1. FIG. 3 is an assembly diagram of a secondary battery B shown in FIG. 2.

The battery module BM according to the first embodiment of the present disclosure and the secondary battery B included in the battery module BM will be described with reference to FIGS. 1 to 3.

As shown in FIG. 2, at least one secondary battery B may form the battery module BM. The battery module BM may include a battery case 20 having a battery accommodation space 100S for accommodating the secondary battery B. The plurality of secondary batteries B may be stacked in a direction. The module case 100 may have a shape that conforms to the shape of the plurality of secondary batteries B. That is, the module case 100 may have the battery accommodation space 100S for accommodating the plurality of secondary batteries B. When the plurality of secondary batteries B is stacked to form a battery stack, the battery stack may have an approximately rectangular prism shape as a whole. Accordingly, the module case 100 may have an approximately rectangular prism shape to conform to the shape of the battery stack so as to cover the battery stack.

The module case 100 may include a module case body 110 having a "U" shape in cross section, and an opening in communication with the battery accommodation space 100S. The module case 100 may include a module case 100 cover to cover at least one of the openings formed in the module case body 110. For example, the module case body 110 may be configured to cover the lower surface and the left and right surfaces of the battery accommodation space 100S, and the module case 100 cover may have a plate shape to cover the upper side of the battery accommodation space 100S. The battery accommodation space 100S may be covered with the end plate 130 located at the front side and the rear side of the module case body 110. More specifically, at least part of the battery accommodation space 100S may be covered by a busbar frame 210 located at a side of the end plate 130 in a direction facing the battery accommodation space 100S, and the end plate 130 may cover the battery accommodation space 100S together with the busbar frame 210.

In the secondary battery B as described below, electricity produced from the electrode may move toward an electrode lead 12 through an electrode tab 11. To control the electricity released from the electrode lead 12 of each of the plurality of secondary batteries B, an end portion of each electrode lead 12 may contact the busbar 200. The busbar 200 may include a plurality of busbars 200 each corresponding to each of the electrode leads 12. The busbar 200 may be, for example, a metal plate having a plate shape. The electrode lead 12 may be thinner than the busbar 200, and accordingly the electrode lead 12 is not immobilized, which makes it difficult to control. When the electrode lead 12 contacts the busbar 200, and electricity moving through the electrode lead 12 flows through the busbar 200, a component requiring electricity may be supplied with electricity when it contacts the busbar 200. As the busbar 200 may have a larger thickness than the electrode lead 12, electrical connection may be established more easily than direct electrical connection to the electrode lead 12. The busbar 200 may be mounted and fixed to the busbar frame 210. The busbar 200 may be coupled to the busbar frame 210 by an interference fit. However, it should be understood that the present disclosure is not limited thereto, and the aspect of the present disclosure may be applied to the busbar 200 coupled to the busbar frame 210 by a coupler or an adhesive. Parts of the plurality of busbars 200 may be exposed to the outside of the end plate 130 as described below, to allow the component requiring electricity to be easily connected to the busbar 200.

The battery module BM may include the plurality of secondary batteries B, and the plurality of secondary batteries B may have different voltages during operation. When the plurality of secondary batteries B has the equal voltage, each secondary battery B may keep the state of charge equal, and accordingly, when charging the plurality of secondary batteries B, they may be equally charged. That is, when the voltage of some of the plurality of secondary batteries B is much lower than the voltage of the other secondary batteries B, it may be necessary to charge all the plurality of secondary batteries B, and in this case, the plurality of secondary batteries B did not use up their electrical energy, but they are required to charge, so the charge capacity may seem lower than the actual charge capacity. Further, the voltage of the plurality of secondary batteries B above a preset value may be recognized as a sign that side reaction occurred in some of the plurality of secondary batteries B. Accordingly, it may be necessary to monitor the voltage of the plurality of secondary batteries B.

To this end, the battery module BM may include a substrate 220 configured to contact the busbar 200 in which electricity of the plurality of secondary batteries B flows, and a connector 230 may be mounted on the substrate 220 and connected to a Battery Management System (BMS) configured to monitor the voltage of the secondary battery B. The BMS may be electrically connected to the connector 230, and information associated with the voltage received by the substrate 220 that contacts the busbar 200 may be transmitted to the BMS through the connector 230 and the BMS may receive the information associated with the voltage of the secondary battery B. The BMS may control each of the plurality of secondary batteries B based on the received voltage information associated with each of the plurality of secondary batteries B so that each of the plurality of secondary batteries B has the preset range of voltage.

Hereinafter, the secondary battery B included in the battery module BM will be described in more detail.

The secondary battery B may be configured to produce electrical energy. The secondary battery B may include an electrode assembly 10. The electrode assembly 10 may be formed by stacking an electrode (not shown) and a separator (not shown) in an alternating manner. First, a slurry including an electrode active material, a binder and a plasticizer may be applied to a positive current collector and a negative current collector to manufacture a positive electrode and a negative electrode, respectively. Additionally, separators may be stacked between the electrodes to form the electrode assembly 10, and the electrode assembly 10 may be inserted into a battery case 20 (not shown) and an electrolyte (not shown) may be injected, followed by sealing.

Specifically, the electrode assembly 10 may include two types of electrodes, the positive electrode and the negative electrode, and the separator interposed between the electrodes to insulate the electrodes. The electrode assembly 10 may come in a stack type, a jellyroll type, a stack-and-fold type and so on, according to the way that the positive electrode, the negative electrode and the separator are stacked. Each of the two types of electrodes, i.e., the positive electrode and the negative electrode, may have a structure in which the active material slurry is applied to the metal foil or metal mesh-type electrode current collector including aluminum and copper, respectively. The slurry may be generally formed by stirring the granular active material, an auxiliary conductor, the binder and the plasticizer with an addition of a solvent. The solvent of the slurry may be removed in the subsequent process.

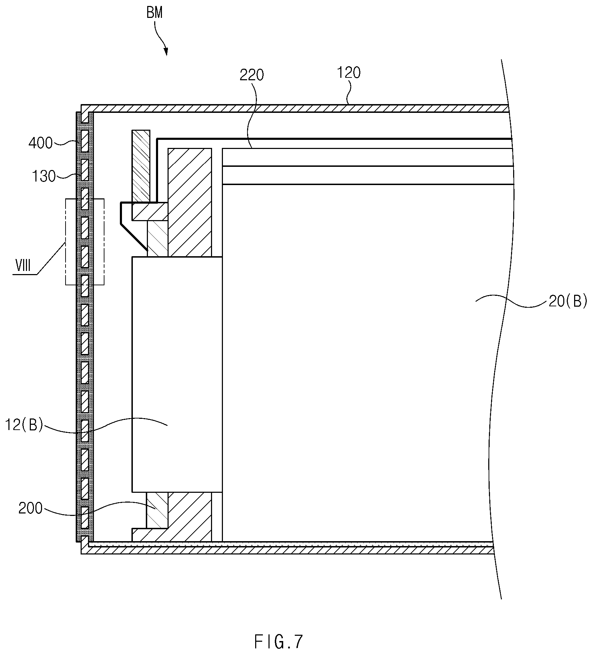

More specifically, the positive electrode may include a positive electrode material having strong oxidizing power that provides electrons. For example, the positive electrode material may include lithium ion-transition metal-oxygen. The transition metal may include nickel, cobalt or manganese. The negative electrode may include a negative electrode material having strong reducing power that accepts electrons. For example, the negative electrode material may include graphite. During charging and discharging of the secondary battery B, electrons may move with the movement of lithium ions. In this case, lithium ions may move through the electrolyte (see FIG. 7) located between the positive electrode and the negative electrode, and electrons may move through a wire connecting the positive electrode to the negative electrode.

The electrode tab 11 may be connected to each of the positive electrode and the negative electrode of the electrode assembly 10 and be protruded outward from the electrode assembly 10 to act as a path of movement of electrons between the inside and outside of the electrode assembly 10. The plurality of electrode tabs 11 may be each protruded in different directions of the electrode assembly 10 as shown in FIG. 3, but is not limited thereto, and each of the plurality of electrode tabs 11 may be protruded parallel to each other in the same direction or may be protruded in various directions.

The electrode lead 12 may be connected to the electrode tab 11 to supply electricity to the outside of the secondary battery B. The electrode lead 12 may be connected to the electrode tab 11 by spot welding.

An insulation portion 13 may be configured to cover a part of the electrode lead 12. The insulation portion 13 may be disposed at a location corresponding to a fusion position of a side portion 22 as described below. When the side portions 22 are joined to each other, the insulation portion 13 may be located between the side portions 22 to adhere the electrode lead 12 to the pouch. In addition, it may prevent electricity produced from the electrode assembly 10 from flowing to the pouch through the electrode lead 12 and maintain the sealing of the pouch. Therefore, the insulation portion 13 may be made of a non-conductor that does not conduct electricity. For example, the insulation portion 13 may be an insulating tape that is easy to attach to the electrode lead 12 and has a relatively small thickness. However, the present disclosure is not limited thereto, and the insulation portion 13 may include any element that insulates the electrode lead 12.

The pouch may be made of a material having high flexibility to accommodate the electrode assembly 10 in the pouch. When drawing a pouch film having flexibility using a punch (not shown), a part of the pouch film may be stretched to form an accommodation portion 21 having a pocket-shaped electrode accommodation space 20S, thereby manufacturing the pouch. The pouch accommodating the electrode assembly 10 with a part of the electrode lead 12 being exposed may be sealed. For reference, as the specification mentions the pouch as an example of the battery case 20, the pouch, the pouch film, and the battery case 20 may have substantially the same meaning.

The side portion 22 may be disposed around the accommodation portion 21. The side portion 22 may be extended from the edge of the accommodation portion 21 toward the outside of the accommodation portion 21. When the accommodation portion 21 includes two accommodation portions 21, a folding portion 25 located between the two accommodation portions 21 may be formed. The folding portion 25 may be folded on the basis of an imaginary line on the folding portion 25, so that the two accommodation portions 21 may coincide. Additionally, the corresponding side portions 22 may contact each other. In this instance, each part of the side portions 22 that meet each other may be a sealant layer as described below.

The pouch film may include a plurality of layers. The pouch film may include a sealant layer, a barrier layer and/or a surface protective layer. Additionally, the sealant layer, the barrier layer and the surface protective layer may be stacked in that order. In this instance, the sealant layer may include a polymer material. For example, the sealant layer may include polypropylene. The barrier layer may include a metal material. For example, the barrier layer may include aluminum. The surface protective layer may include a polymer material. For example, the surface protective layer may include nylon.

As mentioned above, the side portions 22 that contact each other may be located such that the sealant layers contact each other. In this instance, when heat and pressure are applied to the side portions 22 that contact each other, the sealant layers of the side layers that contact each other may be joined and the side portions 22 may be sealed.

The side portion 22 may include a lead sealing portion 23 located adjacent to the electrode lead 12. The side portion 22 may include a degassing sealing portion 24 extended in a direction that is different from the extension direction of the lead sealing portion 23. The pouch film of the secondary battery B may be sealed by folding the folding portion 25, and subsequently, joining the two lead sealing portions 23. After the lead sealing portions 23 are joined to each other, a degassing process may be performed to remove gas remaining in the degassing sealing portion 24, and a trimming process may be performed to cut unnecessary parts so that the degassing sealing portion 24 may have a predetermined width. After the trimming process is performed, the degassing sealing portion 24 may have the predetermined width. A part of the degassing sealing portion 24 may be bent by folding to form the side folding portion 25. This is because the smaller width of the degassing sealing portion 24, the higher energy density per unit volume. In particular, the degassing sealing portion 24 shown in FIG. 3 may be reduced in length by trimming and folded so that it may be formed as a component of the completed secondary battery B.

The secondary battery B may produce electrical energy by chemical reaction of the surrounding components including the electrodes. However, in this process, an unintended reaction or side reaction may occur and in extreme cases, the side reaction may cause flames. It would be best to prevent side reaction, but when flames occurred due to side reaction, it may be necessary to prevent the flames from spreading out. Hereinafter, an embodiment of the present disclosure for achieving the objective will be described.

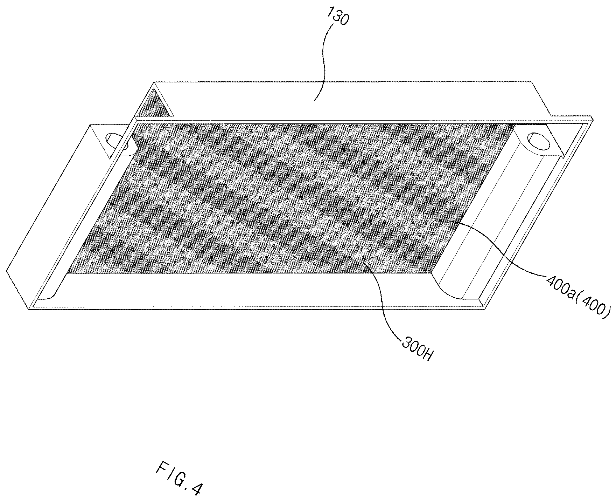

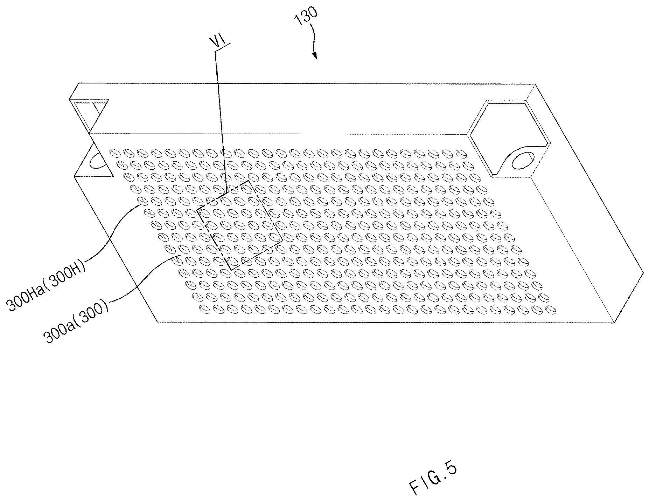

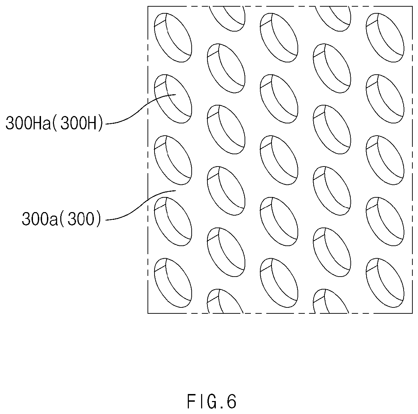

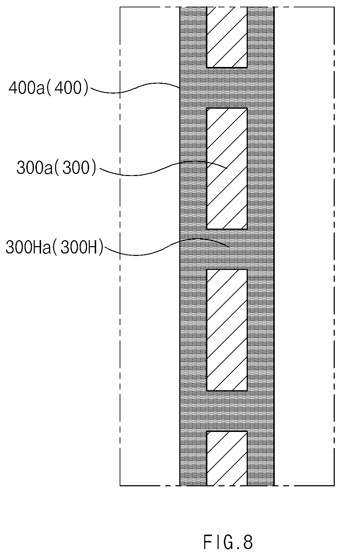

FIG. 4 is a rear perspective view showing the end plate 130 of the battery module BM shown in FIG. 2 and its neighborhood. FIG. 5 is a front perspective view of the end plate 130 shown in FIG. 4. FIG. 6 is an enlarged perspective view of section VI of the end plate 130 shown in FIG. 5. FIG. 7 is a cross-sectional view of the battery module BM shown in FIG. 1, taken along the line VII-VII'. FIG. 8 is an enlarged cross-sectional view of section VIII of the battery module BM shown in FIG. 7.

The battery module BM according to the first embodiment of the present disclosure will be described in further detail with reference to FIGS. 4 to 8.

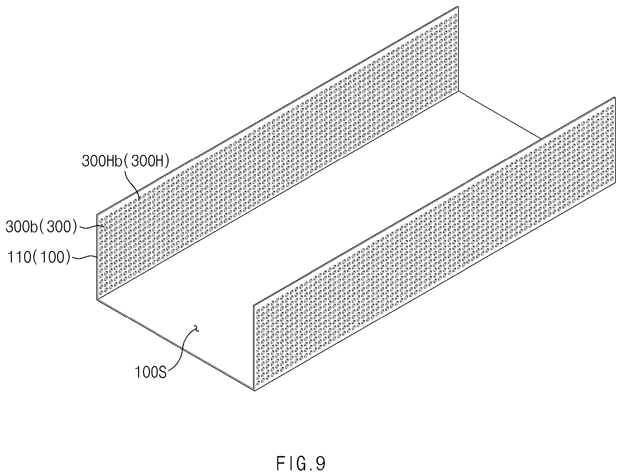

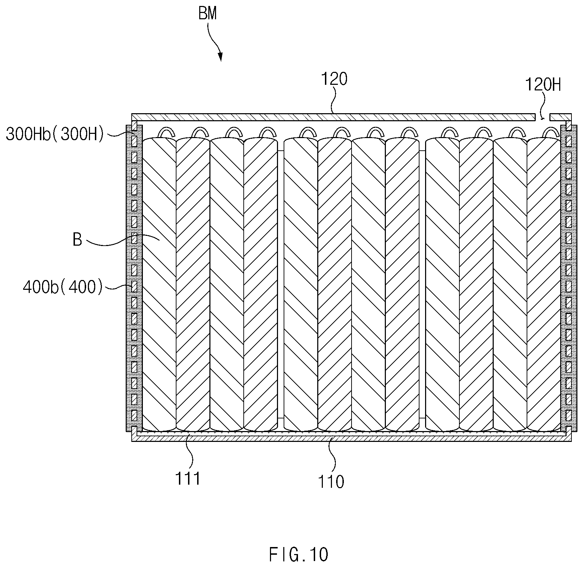

As shown in FIG. 5, the end plate 130 may be provided. The end plate 130 may include a mesh portion 300. Because the end plate 130 may be a component of the module case 100, it may be said that the module case 100 may include the mesh portion 300 having a mesh shape. Accordingly, for example, the mesh portion 300 may be formed in the module case body 110 as described below with reference to FIGS. 9 and 10, and the mesh portion 300 may be formed in a module cover 120.

In particular, because the module case 100 is located at the outermost side of the battery module BM, it is located closest to the adjacent battery module BM, so when a refractory paint layer 400 as described below is formed on the module case 100, heat transfer to the adjacent battery module BM may be effectively prevented.

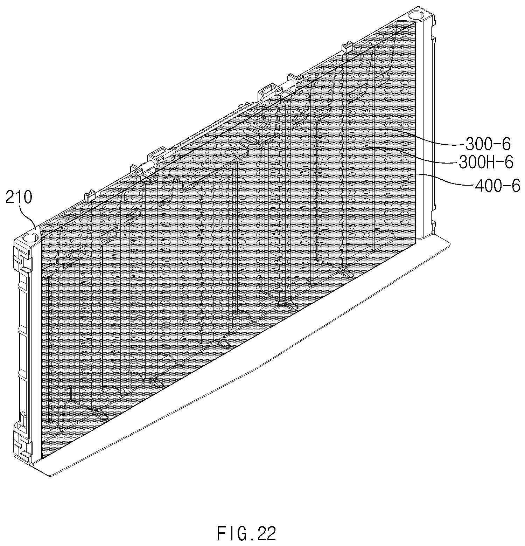

Further, the module case 100 may include a metal material for the purpose of stiffness, and accordingly the module case 100 is less likely to change the shape at high temperatures, thereby allowing the refractory paint layer 400 as described below to play its position. For example, the busbar frame 210 in a seventh embodiment described with reference to FIG. 22 usually includes a plastic material because its required stiffness is lower than that of the module case 100, but because plastics may change the shape when they melt at high temperatures, it may be difficult to properly accommodate the refractory paint layer 400. In contrast, the module case 100 may sufficiently accommodate the refractory paint layer 400 at high temperatures.

In this instance, the mesh shape may be formed by forming a mesh hole 300H, or may be formed by having an uneven shape. The mesh shape may be defined as a shape with larger surface area than a non-mesh shape.

Additionally, the refractory paint layer 400 that is applied to the mesh portion 300 may be the refractory paint layer 400 that foams by heat of a predetermined temperature or more. That is, the battery module BM may include the refractory paint layer 400 that foams based on heat of the predetermined temperature or more. The refractory paint layer 400 may include a material that expands the volume by foaming approximately 10 times or more and 100 times or less when heated. For example, the refractory paint layer 400 may include ammonium phosphate and may foam at about 250°C. Alternatively, the refractory paint layer 400 may include an epoxy material. The temperature at which the refractory paint layer 400 starts foaming may vary depending on the material of the refractory paint layer 400. When the battery module BM includes the refractory paint layer 400, in the event of a fire in any of the plurality of secondary batteries B, the refractory paint layer 400 may foam when heated to the predetermined temperature or more, and the foamed refractory paint layer 400 may prevent the transfer of high heat inside the battery module BM to the outside of the battery module BM. Furthermore, the refractory paint layer 400 may keep oxygen out to prevent oxygen infiltration into the battery module BM, thereby minimizing the growth of flames.

When the refractory paint layer 400 is applied to the mesh portion 300 having large surface area, more refractory paint may be applied. Accordingly, it may be possible to prevent the growth of flames more effectively.

In this instance, because flames occurred inside the battery module BM may tend to move outward, to effectively prevent the transfer of flames, the refractory paint layer 400 may be applied to a surface of the battery case 20 facing the secondary battery B. Because the mesh portion 300 may be configured to apply the refractory paint layer 400 in larger amounts, the mesh portion 300 may be present on the side of the battery case 20 facing the secondary battery B. This represents that the refractory paint layer 400 and the mesh portion 300 may be formed on the side of the battery case 20 facing the secondary battery B, but it does not signify that the refractory paint layer 400 and the mesh portion 300 are only formed on the side of the battery case 20 facing the secondary battery B, and it should be understood that the refractory paint layer 400 and the mesh portion 300 may be formed at any other area.

The mesh portion 300 may have a plurality of mesh holes 300H arranged at a predetermined interval. When the mesh portion 300 has the plurality of mesh holes 300H, the mesh portion 300 may be formed simply by forming the mesh holes 300H, which makes the process easy. Here, the hole shape may have a circular shape as shown in FIG. 6. Further, when the mesh portion 300 is formed through the mesh holes 300H, an entire surface including an opening of each mesh hole 300H may be the mesh portion 300. As shown in FIG. 5, by the formation of the mesh holes 300H, the mesh portion 300 may be formed on both the front side and the rear side of the end plate 130.

In this instance, as shown in FIG. 5, the end plate 130 may include a first mesh portion 300a facing the electrode lead 12. Additionally, the refractory paint layer 400 applied to the first mesh portion 300a may be defined as a first refractory paint layer 400a. The first refractory paint layer 400a may be applied to a surface of the first mesh portion 300a facing the electrode lead 12. When the refractory paint layer 400 is applied to the end plate 130, it may be possible to prevent flame propagation most effectively. This is because the end plate 130 faces the electrode lead 12. More specifically, this is because the end plate 130 faces the lead sealing portion 23 of the battery case 20. As shown in FIG. 2, the battery case 20 may have edges in each of the front-rear direction and the up-down direction, except the left-right direction or the stack direction. In the up-down direction of the battery case 20, the folding portion 25 located on the lower side is connected without a joined part, and thus may not be damaged by tearing. The folded degassing sealing portion 24 located on the upper side has the fusion of the pouch film, but unsealing requires both unfolding and unfusing by the folding process, so it may be difficult to unseal the seal. In contrast, the lead sealing portion 23 located in the front-rear direction is simply sealed by the fusion of the pouch film and does not undergo folding, and a part adjacent to the electrode lead 12 is not the joined part of the pouch films, and is the joined part of the electrode lead 12 or the insulation portion 13 and the pouch film, and thus may be unfused more easily. Accordingly, when the pressure in the secondary battery B increases due to side reaction in the secondary battery B, the lead sealing portion 23 may be likely to be unsealed most easily. When flames occur in the secondary battery B and the lead sealing portion 23 is unsealed, the flames may spread to the outside of the secondary battery B through the unsealed lead sealing portion 23. In this instance, because the end plate 130 faces the lead sealing portion 23, when the refractory paint layer 400 is applied to the end plate 130, the refractory paint layer 400 may prevent flame propagation quickly by contact with the flames emitted from the lead sealing portion 23 in a short time.

In particular, as shown in FIG. 7, the first mesh portion 300a of the end plate 130 may be located facing the electrode lead 12 at a predetermined distance, and in other words, the first mesh portion 300a may be located facing the lead sealing portion 23, so it may be possible to effectively respond to the emitted flames upon unsealing of the lead sealing portion 23.

In this instance, the mesh holes 300H may be formed in the end plate 130 as densely as possible, as shown in FIG. 5. However, as the number of mesh holes 300H increases, the stiffness of the end plate 130 may be reduced, so the mesh holes 300H may be formed in a sufficient number to ensure higher stiffness of the end plate 130 than the minimum stiffness standard. Here, the mesh hole 300H formed in the first mesh portion 300a may be defined as a first mesh hole 300Ha.

As shown in FIG. 8, the first refractory paint layer 400a may pass through the plurality of mesh holes 300H formed in the first mesh portion 300a. Therefore, the reason why the first mesh portion 300a increases in the surface area where the refractory paint layer 400 is applied is because the refractory paint layer may fill each of the plurality of mesh holes 300H. When the first refractory paint layer 400a is accommodated in each of the plurality of mesh holes 300H, the refractory paint layer 400 in larger amounts may be applied to the end plate 130. Further, even though the refractory paint layer 400 in larger amounts is applied to the end plate 130, an increase in the thickness of the end plate 130 may be prevented.

The first refractory paint layer 400a may also be applied to a surface of the first mesh portion 300a facing away from the electrode lead 12. Accordingly, the first refractory paint layer 400a may be disposed around at least part of one surface of the end plate 130.

The refractory paint layer 400 applied to the end plate 130 has been hereinabove described. Hereinafter, it will be described that the refractory paint layer 400 may be applied to any other component than the end plate 130.

FIG. 9 is a perspective view showing the module case body 110 shown in FIG. 2. FIG. 10 is a cross-sectional view of the battery module BM shown in FIG. 1, taken along the line X-X'.

The battery module BM according to the first embodiment of the present disclosure is described in further detail with reference to FIGS. 9 and 10.

The aforementioned module case body 110 may include the lower surface and the sides to form the battery accommodation space 100S for accommodating the secondary battery B. The module case body 110 may include a second mesh portion 300b facing the secondary battery B. The refractory paint layer 400 applied to the second mesh portion 300b may be defined as a second refractory paint layer 400b. The second refractory paint layer 400b may be applied to a surface of the second mesh portion 300b facing the secondary battery B. Both the second refractory paint layer 400b and the first refractory paint layer 400a may be present, or only the second refractory paint layer 400b may be present in the absence of the first refractory paint layer 400a. In particular, because the surface of the module case body 110 facing the plurality of secondary batteries B generally has a larger area than the end plate 130, the formation of the refractory paint layer 400 on the module case body 110 may signify the application of more refractory paint to the module case 100.

The second refractory paint layer 400b may pass through the plurality of mesh holes 300H formed in the second mesh portion 300b. When the second refractory paint layer 400b is accommodated in each of the plurality of mesh holes 300H, the refractory paint layer 400 in larger amounts may be applied to the module case body 110. Further, even though the refractory paint layer 400 in larger amounts is applied to the module case body 110, an increase in the thickness of the module case body 110 may be prevented.

For reference, the mesh hole 300H formed in the second mesh portion 300b may be defined as a second mesh hole 300Hb.

The second refractory paint layer 400b may also be applied to a surface of the second mesh portion 300b facing away from the secondary battery B. Accordingly, the second refractory paint layer 400b may be disposed around at least part of one surface of the module case body 110.

In particular, the second mesh portion 300b may be present on the side of the module case body 110. As can be seen below, the module cover 120 may have a vent hole 120H. When side reaction occurs in the secondary battery B, the pressure increases, and the increased pressure may be relieved or the generated flames may be guided to a certain location, and then treated and managed at that location. Gases and/or flames may be guided to the atmosphere through the vent hole 120H formed in the module cover 120. In particular, because the module cover 120 is located at the upper side of the battery module BM, the flames are directed upward according to the nature, and although the generated gases differ depending on the type, lighter gases than air move upward, so guiding the gases and/or flames through the module cover 120 may be appropriate for the majority of gases and/or flames. During the movement of the gases or flames, the gases or flames are more likely to move along the side of the module frame body than the lower surface, so it may be effective that the second refractory paint layer 400b is formed on the side of the module frame body.

An insulation sheet 111 located between the secondary battery B and the lower surface of the module case body 110 may be further included. Accordingly, the lower surface of the module case body 110 may be covered with the insulation sheet 111. Accordingly, moreover, because the lower surface of the module case body 110 may prevent flame propagation by the insulation sheet 111, the lower surface of the module case body 110 may have a lower need for the second refractory paint layer 400b than the side of the module case body 110.

As mentioned above, as the module cover 120 configured to cover the battery accommodation space 100S, the module cover 120 having the vent hole 120H may be further included. In addition, the refractory paint layer 400 may not be applied to the module cover 120. A plurality of battery modules BM may generally be arranged in the front-rear direction and the left-right direction rather than being stacked in the up-down direction to form a battery pack BP. Therefore, venting the gases or flames to the upper side of the battery module BM may have less influence on the adjacent battery module BM. Further, because there may be no other battery module BM at the upper side of the battery module BM, insulation for lessening the influence on the other battery modules BM may be less needed. Therefore, the second refractory paint layer 400b may not be applied to the module cover 120 located at the upper side of the battery module BM. Because forming the refractory paint layer 400 requires the cost of using the raw material or the refractory paint and the cost of the process of applying the raw material, when the refractory paint layer 400 is not formed, it may be possible to achieve production cost savings of the battery module BM.

However, despite this description, it is obvious that the second refractory paint layer 400b may be applied to the lower surface of the module case body 110 and/or the module cover 120 to enhance the insulation effect.

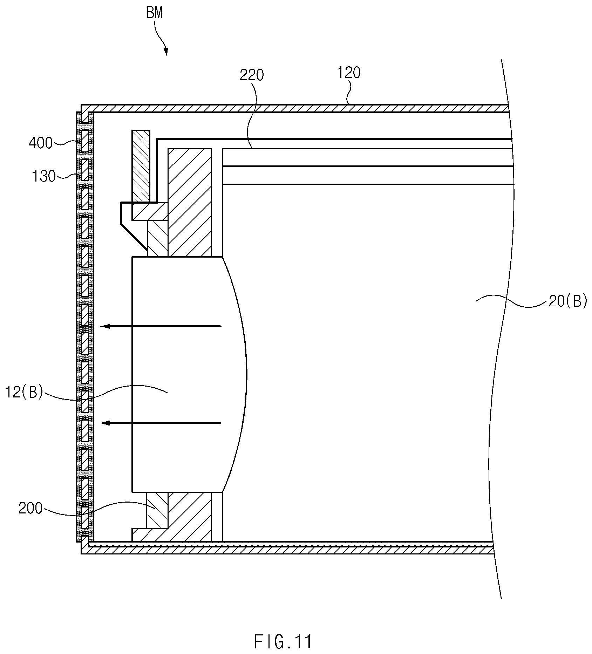

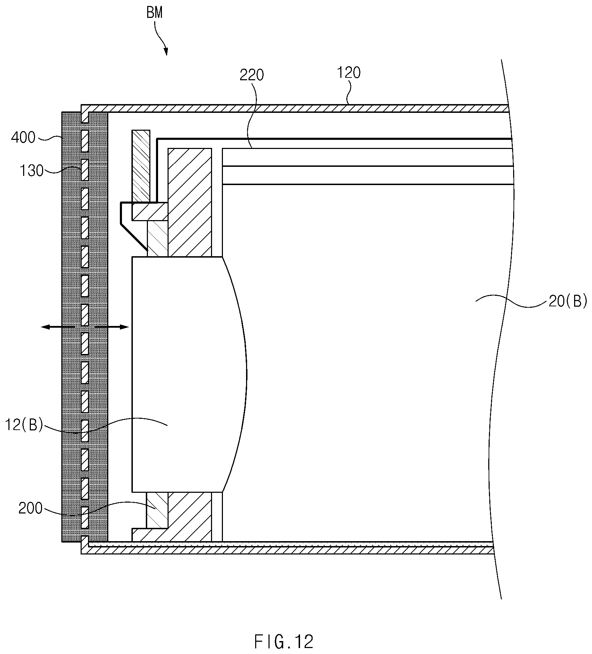

FIG. 11 is a conceptual diagram showing side reaction occurred in the secondary battery B of the battery module BM shown in FIG. 7. FIG. 12 is a conceptual diagram showing that the refractory paint layer 400 foams in the event of flame propagation from the secondary battery B shown in FIG. 11.

The flame propagation from the battery module BM according to the first embodiment of the present disclosure will be described with reference to FIGS. 11 and 12.

As shown in FIG. 11, when side reaction occurs in the secondary battery B, the lead sealing portion 23 may be highly likely to be unsealed. When the seal of the lead sealing portion 23 is unsealed, high temperature gases and/or flames may move between the unsealed lead sealing portions 23. The moving high temperature gases and/or flames may move along the extension direction of the electrode lead 12 through the lead sealing portion 23.

As shown in FIG. 12, the moving high temperature gases and/or flames may encounter the first refractory paint layer 400a. When the first refractory paint layer 400a reaches a predetermined temperature, the first refractory paint layer 400a may foam. The first refractory paint layer 400a may have a larger volume after foaming than its volume before foaming. The foamed first refractory paint layer 400a may prevent flame propagation to the adjacent battery module BM and insulate the heat generated inside the battery module BM.

Further, when the temperature in the battery module BM increases or the flames spread further, the temperature of the second refractory paint layer 400b increases, and accordingly the second refractory paint layer 400b may foam.

The configuration of the battery module BM related to the refractory paint layer 400 has been hereinabove described. Hereinafter, a method for forming the refractory paint layer 400 will be described.

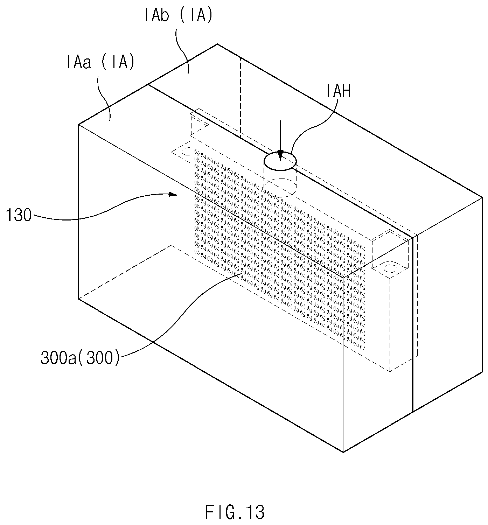

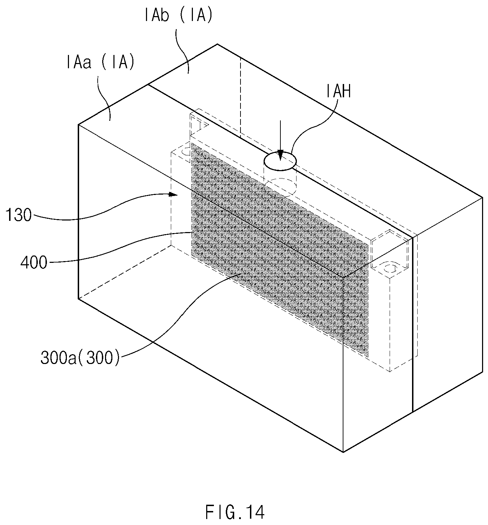

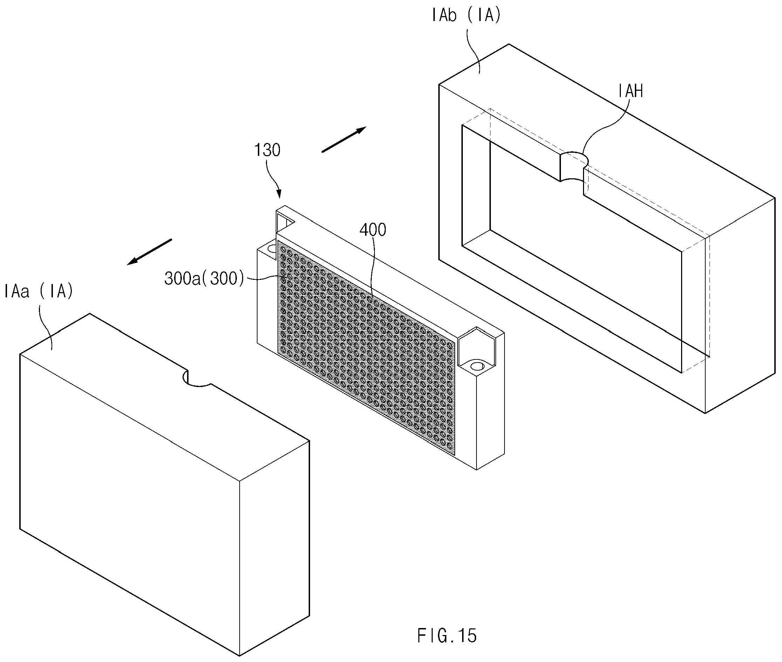

FIG. 13 is a conceptual diagram showing that the end plate 130 shown in FIG. 5 is accommodated in an injection molding device IA. FIG. 14 is a conceptual diagram showing an injection molded product combined with the end plate 130 shown in FIG. 13. FIG. 15 is a conceptual diagram showing that the end plate 130 shown in FIG. 14 is separated from the injection molding device IA.

The method for forming the refractory paint layer 400 according to the first embodiment of the present disclosure will be described with reference to FIGS. 13 to 15. In particular, FIGS. 13 to 15 show that the first refractory paint layer 400a is applied to the end plate 130, but this method may be also used to apply the second refractory paint layer 400b to the module case body 110, and further, any type of method for forming the refractory paint layer 400 may be used.

As shown in FIG. 13, the end plate 130 may be accommodated in the injection molding device IA.

The injection molding device IA may include a first injection molding part IAa and a second injection molding part IAb that is different from the first injection molding part IAa. The first injection molding part IAa and the second injection molding part IAb may cover the opposite sides of the end plate 130, respectively.

The injection molding device IA may have an inlet hole IAH. The inlet hole IAH may be extended from the outer side of the injection molding device IA to the end plate 130. The refractory paint may move toward the end plate 130 through the inlet hole IAH.

As shown in FIG. 14, the refractory paint may move to the first mesh portion 300a of the end plate 130 to form the first refractory paint layer 400a. That is, the first refractory paint layer 400a may be applied to the end plate 130 by injection molding. Further, the refractory paint layer 400 may be applied to the module case 100 by injection molding. More specifically, the refractory paint layer 400 may be applied to the module case 100 by low temperature injection molding.

As shown in FIG. 15, the first injection molding part IAa and the second injection molding part IAb may move away from each other, and the end plate 130 coated with the refractory paint layer 400 may be separated from the injection molding device IA.

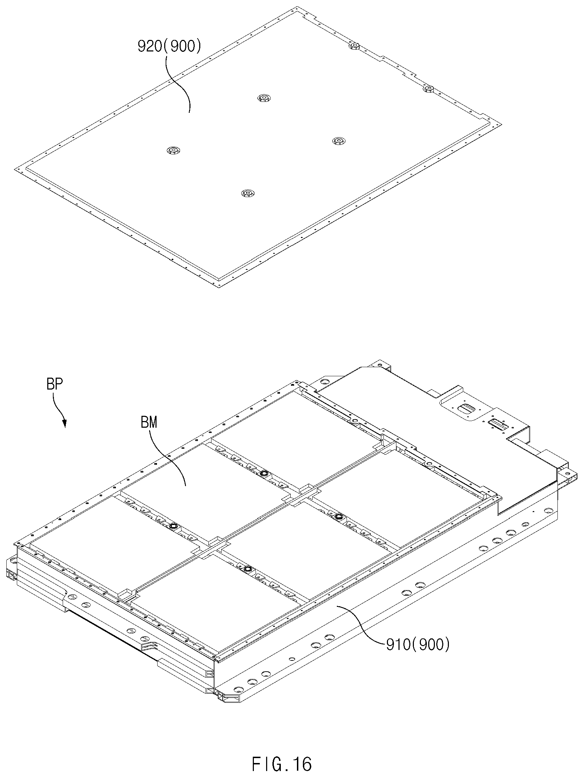

FIG. 16 is an exploded view showing the battery pack BP including the battery module BM shown in FIG. 1.

The battery pack BP according to the first embodiment of the present disclosure will be described with reference to FIG. 16.

As shown in FIG. 16, a plurality of battery modules BM may form the battery pack BP. The battery pack BP may include a pack case 900 configured to accommodate the battery module BM. A pack case body 910 included in the pack case 900 accommodates the battery module BM, and a pack cover 920 included in the pack case 900 may cover the pack case body 910 to cover the battery module BM.

In this instance, because the plurality of battery modules BM may be located close to each other in the pack case 900, when flames are emitted from any of the plurality of battery modules BM, the flames may spread to the adjacent battery module BM, and accordingly the present disclosure described above may work effectively.

Hereinafter, different embodiment(s) from the first embodiment will be described. The description shared with the first embodiment is omitted and the other embodiment(s) will be described based on difference(s). That is, it is obvious that when a certain description not mentioned in the other embodiments is necessary, the description of the first embodiment may make up for the description.

### Second embodiment

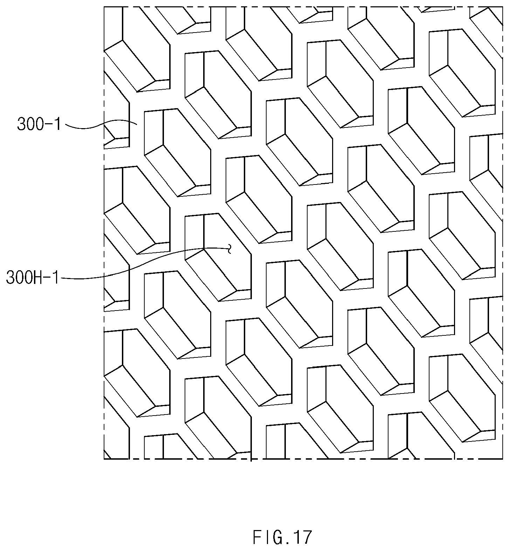

FIG. 17 is an enlarged view of the mesh portion 300 according to the second embodiment of the present disclosure.

The mesh portion 300-1 according to the second embodiment of the present disclosure will be described with reference to FIG. 17. The mesh portion 300-1 shown in FIG. 17 may be defined as a first mesh portion 300a and/or a second mesh portion 300b. Hereinafter, the description of the mesh portion 300 in other embodiments may be equally applied to the first mesh portion 300a and/or the second mesh portion 300b as in the second embodiment. Further, although not mentioned in the description of the second embodiment, the refractory paint layer 400 mentioned in the description of other embodiments below may be equally applied to the first refractory paint layer 400a and/or the second refractory paint layer.

The second embodiment is different from the first embodiment in that the shape of the mesh hole 300H-1 is different. The mesh hole 300H-1 formed in the mesh portion 300-1 of the second embodiment may have a shape with a hexagonal cross section.

### Third embodiment

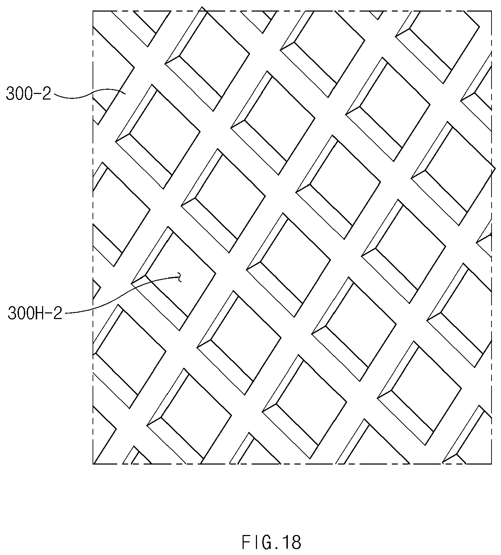

FIG. 18 is an enlarged view of the mesh portion 300-2 according to the third embodiment of the present disclosure.

The mesh portion 300-2 according to the third embodiment of the present disclosure will be described with reference to FIG. 18.

The third embodiment is different from the first embodiment in that the shape of the mesh hole 300H-2 is different. The mesh hole 300H-2 formed in the mesh portion 300-2 of the third embodiment may have a shape with a square cross section.

Because the mesh holes 300H-1, 300H-2 of the second embodiment and/or the third embodiment described above are polygonal in cross section, in addition to drilling a hole by a punch, it may be formed by connecting a wire extended in a direction. For example, the mesh portion 300-1, 300-2 of the second embodiment and/or the third embodiment may be formed by weaving the wire to make a net.

### Fourth embodiment

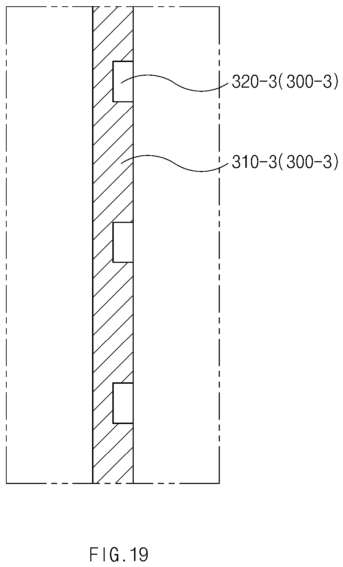

FIG. 19 is a cross-sectional view of the mesh portion 300-3 according to the fourth embodiment of the present disclosure.

The mesh portion 300-3 according to the fourth embodiment of the present disclosure will be described with reference to FIG. 19.

The fourth embodiment is different from the first embodiment in that the mesh hole 300H-3 does not completely pass through the mesh portion 300-3. The mesh hole 300H-3 may be extended from one surface of the mesh portion 300-3 facing the secondary battery B, such that until before it penetrates the other side. As shown in FIG. 19, the mesh hole 300H-3 may be extended from the surface facing the secondary battery B. Accordingly, the cross-sectional area of the mesh portion 300-3 side facing the secondary battery B may be increased, and the refractory paint in larger amounts may be applied to the side facing the secondary battery B.

However, the mesh hole 300H-3 may be extended from the surface of the mesh portion 300-3 facing away from the secondary battery B, but is not limited thereto.

In other words, the mesh portion 300-3 may include a convex portion 320-3 and a concave portion 310-3. The concave portion 310-3 may have the mesh hole 300H-3 having a groove shape. The convex portion 320-3 may form a plurality of convex portions 320-3 and the concave portion 310-3 may include a plurality of concave portions 310-3 to form a regular pattern. The convex portion 320-3 may protrude toward the secondary battery B, and the concave portion 310-3 may be located adjacent to the convex portion 320-3 and recessed in a direction opposite to the protrusion direction of the convex portion 320-3.

### Fifth embodiment

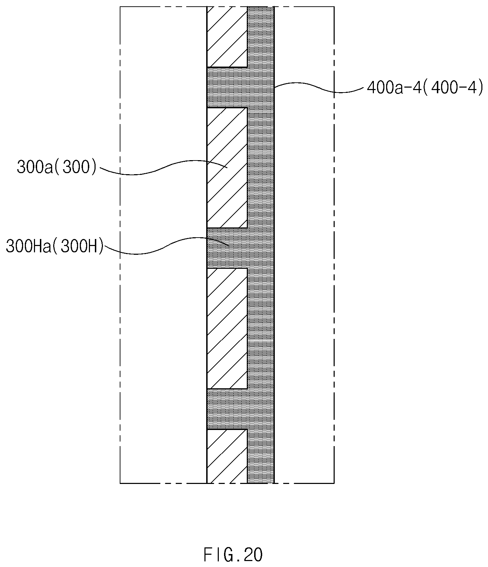

FIG. 20 is a cross-sectional view of the mesh portion 300 and its neighborhood according to the fifth embodiment of the present disclosure.

The mesh portion 300 and the refractory paint layer 400-4 according to the fifth embodiment of the present disclosure will be described with reference to FIG. 20.

The fifth embodiment is different from the first embodiment in that the refractory paint layer 400-4 is applied to only one surface of the mesh portion 300. More specifically, the refractory paint layer 400-4 may be only applied to the surface of the mesh portion 300 facing the secondary battery B. In this instance, the refractory paint layer 400-4 may be configured to completely fill the mesh hole 300H as shown in FIG. 20, or may be configured to fill a part of the mesh hole 300H. Further, the present disclosure is not limited thereto, and the refractory paint layer 400-4 may not fill the mesh hole 300H. Accordingly, it may be possible to effectively prevent thermal runaway of the secondary battery B with a smaller amount of refractory paint used.

Additionally, contrary to FIG. 20, when the refractory paint layer 400-4 is applied to the surface of the mesh portion 300 facing away from the secondary battery B, in the event of side reaction in the secondary battery B, high temperature gases and/or flames does not diffuse to the outside of the battery module BM by the contact with the refractory paint layer 400-4 applied to the mesh portion 300, similar to the refractory paint layer 400-4 only applied to the surface of the mesh portion 300 facing the secondary battery B, and therefore, it should be understood that the aspect of the present disclosure also includes this aspect.

### Sixth embodiment

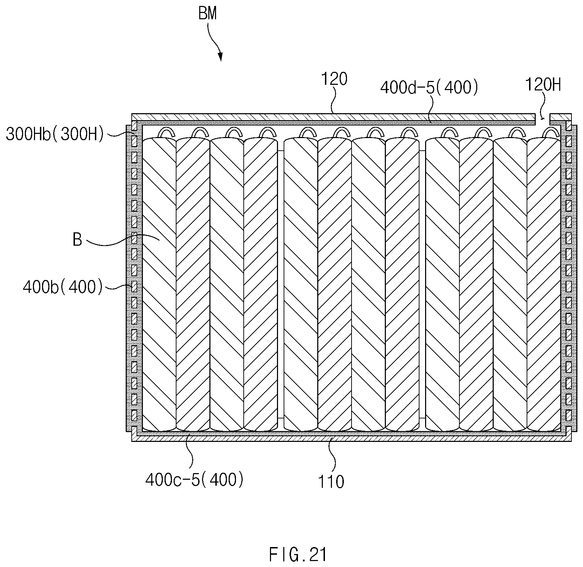

FIG. 21 is a cross-sectional view of the battery module BM according to the sixth embodiment of the present disclosure.

The refractory paint layer 400 according to the sixth embodiment of the present disclosure will be described with reference to FIG. 21.

The sixth embodiment is different from the first embodiment in that the refractory paint layer 400 may be applied to the lower surface of the module case body 110 and/or the module cover 120.

More specifically, the refractory paint layer 400 may include a third refractory paint layer 400c-5 applied to the inner lower surface of the module case body 110. In this case, the insulation sheet 111 of the first embodiment may not be required. The third refractory paint layer 400c-5 may be connected to the second refractory paint layer 400b. When the refractory paint layer 400 is applied to the module case 100 by injection molding of the module case body 110, the third refractory paint layer 400c-5 may be formed concurrently with forming of the second refractory paint layer 400b.

Further, the refractory paint layer 400 may include a fourth refractory paint layer 400d-5 applied to the surface of the module cover 120 facing the secondary battery B. When the refractory paint layer 400 includes the first refractory paint layer 400a, the second refractory paint layer 400b, the third refractory paint layer 400c-5 and the fourth refractory paint layer 400d-5, all six sides of an imaginary rectangular prism surrounding the secondary battery B may be surrounded by the refractory paint layer 400. Accordingly, when side reaction occurs in the secondary battery B, the spread of high temperature gases and/or flames generated from the secondary battery B to the adjacent battery module BM may be suppressed.

### Seventh embodiment

FIG. 22 is a rear perspective view of the busbar frame 210 according to the seventh embodiment of the present disclosure.

The busbar frame 210 and the refractory paint layer 400 applied thereto according to the seventh embodiment of the present disclosure will be described with reference to FIG. 22.

The seventh embodiment is different from the first embodiment in that the refractory paint is applied to the busbar frame 210. The refractory paint layer 400-6 of the first embodiment described above is defined as being applied to the module case 100, while the refractory paint layer 400-6 of the seventh embodiment may be defined as be applied to the module case 100 and/or the busbar frame 210.

In this instance, as described above, the busbar frame 210 may be configured to mount the busbar 200 and may be accommodated in the module case 100. Therefore, when side reaction occurs in the secondary battery B rather than the module case 100, high temperature gases and/or flames generated from the secondary battery B may encounter earlier. Therefore, when the refractory paint is applied to the busbar frame 210 to form the refractory paint layer 400-6, it may be possible to stop the flames more quickly than the first embodiment.

The busbar frame 210 may include the mesh portion 300-6 having the mesh shape. The mesh portion 300-6 of the first embodiment is defined as a component of the module case 100, while the mesh portion 300-6 of the seventh embodiment may be seen as a component of the battery module BM, and the busbar frame 210 may have the mesh portion 300-6 as its component. Accordingly, the mesh portion 300-6 may include the mesh hole 300H-6.

Accordingly, the refractory paint layer 400-6 may be applied to the mesh portion 300-6 and may foam by heat of the predetermined temperature or more.

The module case 100 may include another mesh portion 300 of a mesh shape.

The busbar frame 210 may include a polymer material.

Unless expressly stated otherwise, the disclosed embodiments may be combined with other embodiments. Alternatively, in combining an embodiment with other embodiment, any combination of embodiments may be made unless expressly limited. It should be understood that such a combination of embodiments is disclosed in the present disclosure.

Although the present disclosure has been hereinabove described with regard to a limited number of embodiments and drawings, the present disclosure is not limited thereto, and the present disclosure may be embodied in different forms by persons having ordinary skill in the technical field pertaining to the present disclosure within the technical aspect of the present disclosure and the scope of the appended claims and their equivalents.

### [List of Reference Numerals]

B: Secondary battery
10: Electrode assembly
11: Electrode tab
12: Electrode lead
13: Insulation portion
20: Battery case
20S: Electrode accommodation space
21: Accommodation portion
22: Side portion
23: Lead sealing portion
24: Degassing sealing portion
25: Folding portion
BM: Battery module
100: Module case
100S: Battery accommodation space
110: Module case body
111: Insulation sheet
120: Module cover
120H: Vent hole
130: End plate
200: Busbar
210: Busbar frame
220: Substrate
230: Connector
300: Mesh portion
300a: First mesh portion
300b: Second mesh portion
300H: Mesh hole
300Ha: First mesh hole
300Hb: Second mesh hole
310-3: Concave portion
320-3: Convex portion
400: Refractory paint layer
400a: First refractory paint layer
400b: Second refractory paint layer
400c-5: Third refractory paint layer
400d-5: Fourth refractory paint layer
IA: Injection molding device
IAH: Inlet hole
IAa: First injection molding part
IAb: Second injection molding part
BP: Battery pack
900: Pack case
910: Pack case body
920: Pack cover

## Claims

1. A battery module comprising:
a secondary battery including an electrode lead;
a module case configured to accommodate the secondary battery, the module case including a mesh portion having a mesh shape; and
a refractory paint layer applied to the mesh portion, wherein the refractory paint layer foams by heat of a predetermined temperature or more.

2. The battery module according to claim 1,
wherein the mesh portion has a plurality of mesh holes arranged at a predetermined interval.

3. The battery module according to claim 1,
wherein the module case includes an end plate facing the electrode lead,
wherein the end plate includes a first mesh portion facing the electrode lead,
wherein the refractory paint layer applied to the first mesh portion is defined as a first refractory paint layer, and
wherein the first refractory paint layer is applied to a surface of the first mesh portion facing the electrode lead.

4. The battery module according to claim 3,
wherein the first refractory paint layer passes through a plurality of mesh holes formed in the first mesh portion.

5. The battery module according to claim 3,
wherein the first refractory paint layer is applied to a surface of the first mesh portion facing away from the electrode lead.

6. The battery module according to claim 2,
wherein the plurality of mesh holes has a groove shape.

7. The battery module according to claim 1,
wherein the module case includes a module case body including a lower surface and sides to form a battery accommodation space for accommodating the secondary battery,
wherein the module case body includes a second mesh portion facing the secondary battery,
wherein the refractory paint layer applied to the second mesh portion is defined as a second refractory paint layer, and
wherein the second refractory paint layer is applied to a surface of the second mesh portion facing the secondary battery.

8. The battery module according to claim 7,
wherein the second refractory paint layer passes through a plurality of mesh holes formed in the second mesh portion.

9. The battery module according to claim 7,
wherein the second refractory paint layer is applied to a surface of the second mesh portion facing away from the secondary battery.

10. The battery module according to claim 7,
wherein the second mesh portion is present on the side of the module case body.

11. The battery module according to claim 7, further comprising:
an insulation sheet located between the secondary battery and the lower surface of the module case body.

12. The battery module according to claim 7, further comprising:
a module cover configured to cover the battery accommodation space, the module cover having a vent hole.

13. The battery module according to claim 12,
wherein the refractory paint layer is not applied to the module cover.

14. The battery module according to claim 1,
wherein the refractory paint layer is applied to the module case by injection molding.

15. The battery module according to claim 1,
wherein the module case includes a metal material.

16. A battery module comprising:
a secondary battery including an electrode lead;
a module case configured to accommodate the secondary battery;
a bus bar electrically connected to the electrode lead;
a busbar frame configured to mount the busbar, wherein the busbar frame is accommodated in the module case, the busbar frame including a mesh portion having a mesh shape; and
a refractory paint layer applied to the mesh portion, wherein the refractory paint layer foams by heat of a predetermined temperature or more.

17. The battery module according to claim 16,
wherein the mesh portion has a plurality of mesh holes arranged at a predetermined interval.

18. The battery module according to claim 16,
wherein the module case includes another mesh portion of a mesh shape.

19. The battery module according to claim 16,
wherein the busbar frame includes a polymer material.

20. A battery pack comprising:
a battery module; and
a pack case configured to accommodate the battery module,
wherein the battery module includes:
a secondary battery including an electrode lead;
a module case configured to accommodate the secondary battery, the module case including an end plate facing the electrode lead; and
a refractory paint layer applied to an inner side of the module case, the refractory paint layer including a first refractory paint layer applied to the end plate, and
wherein the end plate includes a mesh portion having a mesh shape to which the first refractory paint layer is applied.
